# EUROPÄISCHE PATENTSCHRIFT

(11) **EP 1 293 121 B1**
(45) Veröffentlichungstag und Bekanntmachung des Hinweises auf die Patenterteilung: **31.05.2006**
(21) Anmeldenummer: 02019246.4
(22) Anmeldetag: 27.08.2002
(51) Int. Cl.: A01L 5/00

(54) **Hufeisenartiger, plattenförmiger Hufbeschlag aus Kunststoff mit Verbindungssteg**
Horse-shoe type, plate-shaped, plastic hoof fitting with a crosspiece connection
Fer à cheval en matière plastique, en forme de plaque, avec traverse de connexion

(30) Priorität: 18.09.2001 DE 20115385 U
(43) Veröffentlichungstag der Anmeldung: 19.03.2003
(73) Patentinhaber: CERA Handelsgesellschaft mbH, 87674 Ruderatshofen-Immenhofen (DE)
(72) Erfinder: Rafeld, Karl, 87499 Wildpoldsried (DE)
(74) Vertreter: Hutzelmann, Gerhard

(56) Entgegenhaltungen:
- EP-A- 1 106 064
- DE-U- 20 101 172
- FR-A- 688 344
- GB-A- 358 446
- GB-A- 2 333 686

## Beschreibung

Die Erfindung betrifft einen hufeisenartigen, plattenförmigen Hufbeschlag aus Kunststoff gemäss dem Oberbegriff des Anspruchs 1.

Ein derartiger Hufbeschlag ist beispielsweise aus dem Gebrauchsmuster 201 01 172 bekannt.

Der Verbindungssteg des bekannten Hufbeschlages ist als Pass-Stück ausgebildet, das in die Oberfläche der Schenkelenden einsetzbar ist, um diese Enden formschlüssig und kraftschlüssig miteinander zu verbinden bzw. verbunden zu halten.

Es hat sich nun gezeigt, dass dieses Pass-Stück, auch Brücke genannt, nicht verhindert, dass sich der Hufbeschlag, insbesondere bei der Montage grosser Pass-Stücke oder Brücken, durch Aufbiegen zur Hufinnenseite hin verformt und dadurch Druck auf den Huf ausübt. Um diesen Nachteil zu beseitigen wird erfindungsgemäss vorgeschlagen, dass der Verbindungssteg aus wenigstens einem Pass-Stück und einem Brückenadapter besteht, die im Einbauzustand im wesentlichen deckungsgleich übereinanderliegen und miteinander verbunden sind und von denen das Pass-Stück in der dem Huf zugewandten Oberseite des Hufbeschlags und der Brückenadapter in der Unterseite und damit in der Lauffläche des Hufbeschlags im Bereich der Enden der Schenkel des Hufbeschlags im wesentlichen vollständig integriert sind.

Der sogenannte Brückenadapter ist also ein Verstärkungselement, das dem elastischen Verbiegen und damit Verformen des Pass-Stücks entgegenwirkt.

Gemäss vorteilhafter Ausgestaltungen des Erfindungsvorschlags sind Pass-Stück und Brückenadapter mit den Schenkelenden verschraubt, so dass sie gemeinsam die Enden der beiden Schenkel des Hufbeschlags formschlüssig und kraftschlüssig verbinden.

Insbesondere können das Pass-Stück und der Brückenadapter mittels noppen- oder stegartiger Verbindungselemente, die aus der Oberfläche des Brückenadapters und/oder des Pass-Stücks herausragen und in ihnen gegenüberliegende Vertiefungen des Pass-Stücks oder Brückenadapters eingreifen, miteinander verbunden sein.

Weitere vorteilhafte Ausgestaltungen der Erfindung sind in den Unteransprüchen gekennzeichnet.

Die Erfindung wird im folgenden an Hand der in der Zeichnung dargestellten Ausführungsbeispiele näher erläutert. In der Zeichnung zeigen:
- Fig. 1: eine Draufsicht des Hufbeschlags mit eingebautem Pass-Stück,
- Fig. 2: eine Schnittansicht des Hufbeschlags von Fig. 1 längs der Linie A-A,
- Fig. 3: eine Draufsicht des Pass-Stücks,
- Fig. 4: eine Stirnansicht des Pass-Stücks,
- Fig. 5: eine vergrößerte Detaildraufsicht des linken Schenkelendes des Hufbeschlags von Fig. 1.
- Fig. 6: eine gegenüber Fig. 1 vergrößerte Draufsicht auf die Lauffläche des plattenförmigen Hufbeschlags gemäß einer weiteren Ausführungsform der Erfindung,
- Fig. 7: eine Schnittansicht längs der Linie E-E von Fig. 6,
- Fig. 8: eine der Fig. 7 entsprechende Schnittansicht eines in die Schenkelenden eingebauten Verbindungsstegs, bestehend aus einem Pass-Stück der in Fig. 7 gezeigten Art und einem Brückenadapter,
- Fig. 9: eine Draufsicht des Brückenadapters von Fig. 8 und
- Fig. 10: eine Stirnansicht des Adapters von Fig. 9.

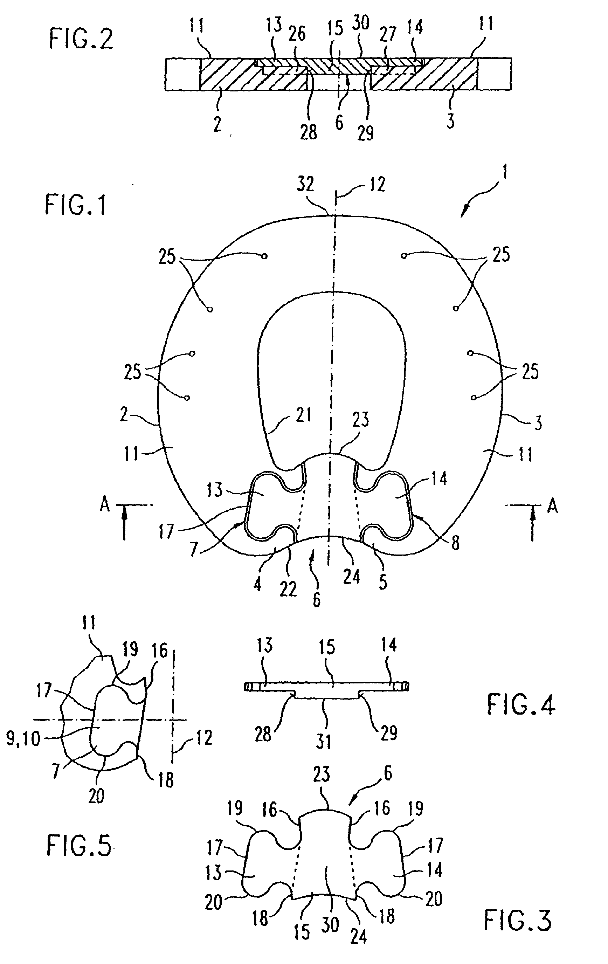

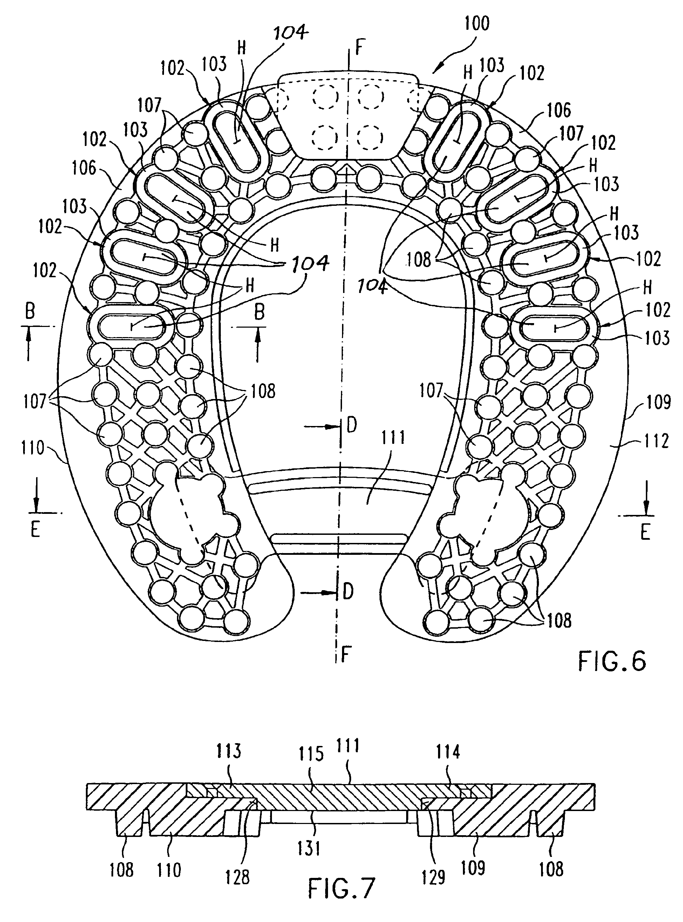

Der in Fig. 1 gezeigte plattenförmige Hufbeschlag 1 aus Kunststoff weist grundsätzlich die bekannte hufeisenförmige Konfiguration auf und ist in seiner Oberfläche 11 mit Löchern 25 versehen, die zur Befestigung des Beschlags mit Hilfe von Nägeln, Schrauben u.dgl. im Bereich der sogenannten weißen Linie des Hufs dienen. Er besitzt zwei Schenkel 2, 3, deren Enden 4, 5 im Strahlbereich des Hufes mit hinterschnittenen Aussparungen 7, 8 in Form flächiger, seitlicher Auswölbungen 9, 10 versehen sind, wie auch aus der Detailansicht von Fig. 5 ersichtlich ist. In diese Aussparungen ist ein entsprechend geformtes Paßstück 6 eingesetzt, das in der Oberfläche 11 der Schenkelenden im wesentlichen vollständig integriert ist, um diese Oberfläche wie bei einem in sich geschlossenen Hufbeschlag zu schließen.

Das Paßstück 6 verbindet die beiden Schenkelenden 4, 5 formschlüssig und ist symmetrisch zur Längsachse 12 des Hufbeschlags 1 ausgebildet, wie aus den Figuren 3 und 4 ersichtlich. Es besitzt zwei in die Oberfläche der Schenkelenden integrierbare, flache seitliche Flügel 13, 14 und ein diese verbindendes, erhabenes Mittelstück 15, das, wie aus den Fig. 2 und 4 ersichtlich, in bezug auf die seitlichen Flügel 13, 14 eine der Hufoberfläche zugewandte Unterseite 31 aufweist sowie eine der Hufoberfläche abgewandte Oberseite 30, die mit den Flügeln 13,14 oder seitlichen Auswölbungen 9, 10 in einer Ebene liegt und im Einbauzustand, wie insbesondere aus Fig. 2 hervorgeht, mit der Oberfläche 11 der Schenkelenden 4, 5 bündig ist.

Zu diesem Zweck sind die den seitlichen Flügeln 13, 14 des symmetrisch zur Längsachse 12 des Hufbeschlags 1 und damit zu den Schenkeln 2, 3 ausgebildeten Pass-Stücks 6 hinsichtlich ihrer Konfiguration entsprechenden Aussparungen 7, 8 in den Schenkelenden mit zur Längsachse 12 schräg verlaufenden Umrissteillinien 16, 17, 18 versehen, wie aus Fig. 5 ersichtlich. Je ein gerader Linienteil 16, 18 befindet sich am inneren Umriss 21 und am äußeren Umriss 22 jedes Schenkelendes 4, 5, und diese beiden Innen- und Aussenteile 16, 18 sind entgegengesetzt zur Längsachse 12 des Hufbeschlags geneigt. Zwischen dem geraden Innenteil 16 und dem geraden Außenteil 18 ist ein dritter gerade Umrisslinienteil 17 vorgesehen, der mit den beiden erstgenannten Teilen 16 und 18 durch zwei S-förmig gebogene Umrisslinienteile 19, 20 verbunden ist und ebenfalls zur Längsachse des Hufbeschlags geneigt ausgebildet ist. Die rechtwinklig zur Längsachse 12 des Hufbeschlags gemessene Breite jedes Flügels 13, 14 entspricht etwa der Breite des die beiden Flügel verbindenden Mittelstücks 15.

Wie aus Fig. 1 ersichtlich, werden der äußere Umriss 22 und der innere Umriss 21 der Schenkelenden 4, 5 durch die obere Umrisslinie 23 bzw. untere Umrisslinie 24 des Pass-Stücks 6 fortgesetzt, wobei die Schenkelenden 4, 5 in Richtung auf das kopfseitige Ende 32 des Hufbeschlags konvex bzw. konkav gekrümmt und symmetrisch zur Längsachse 12 ausgebildet sind.

Die Schenkelenden 4, 5 begrenzen somit eine Öffnung, deren Rand so geformt ist, daß er im Bereich der Schenkeloberfläche 11 dem äußeren Umriss des Pass-Stücks 6 entspricht und auf der der Oberfläche 11 abgewandten Unterseite des Pass-Stücks durch eine Kante begrenzt ist, die die Randkanten 28, 29 des erhabenen Mittelteils 15 des Pass-Stücks umschließen, wobei die das Pass-Stück aufnehmende Öffnung abgesetzte Lagerflächen 26, 27 zur Aufnahme der Flügel 13, 14 aufweist.

Auf diese Weise erhält das Pass-Stück zwischen den Schenkelenden 4, 5 einen Sitz, der nicht nur eine Höhenbegrenzung mit Hilfe der Lagerflächen 26, 27 innerhalb der Schenkelenden, sondern auch eine Seitenbegrenzung mit Hilfe des Randes der Aussparungen 7, 8 aufweist. Somit lässt sich das Pass-Stück nach seinem Einbau entweder mit den Schenkelenden verschweissen oder verschrauben oder anderweitig befestigen, wobei im Falle der Verschraubung die kleeblattförmigen Auswölbungen 9, 10, die auf den Lagerflächen 26, 27 aufliegen, miteinander verbunden werden.

Darüber hinaus ist die Möglichkeit gegeben, das Pass-Stück mit Rastelementen zu versehen, die beim Einbau in entsprechend ausgebildete Gegenelemente an den Schenkelelementen einrasten, um die gewünschte Konfiguration des Hufbeschlags sicherzustellen.

Der aus Kunststoff bestehende plattenförmige Hufbeschlag 100 der Fig. 6 und 7 weist zwei Schenkel 109, 110 auf, die im Bereich ihrer Enden durch einen Verbindungssteg in Form eines flächendeckenden separates Pass-Stücks 111, das in die Schenkelenden eingesetzt wird und erforderlichenfalls wieder entfernbar bzw. aus den Schenkelenden herausnehmbar ist, miteinander verbunden sind. Die Lauffläche 112 des Beschlags ist mit Profilkörpern in Gestalt von langlochfömrigen Erhebungen 102 sowie Noppen 1088 versehen. Diese Erhebungen sind Ausbildungen von Vertiefungen , in die jeweils ein nicht dargestellter Hufnagel plazierbar ist, und werden von einem Rand 1033 begrenzt, dessen Höhe im allgemeinen der Höhe des Hufnagelkopfes entspricht.

In dem Boden der Vertiefung 104 kann sich wenigsten ein Loch zur Aufnahme der Spitze bzw. des Schaftes des Hufnagels befinden. Dieses Loch ist in der Zeichnung nicht dargestellt. Die Länge der langlochförmigen Erhebung 102 bzw. der entsprechend gestalteten Vertiefung 104 entspricht wenigstens der doppelten Längenabmessung eines Hufnagels, so dass beim Beschlagen des Hufes der Hufbeschlag im Hinblick auf die Hufoberfläche seitlich justiert werden kann, um die weiße Linie H des Hufes, in die die Hufnägel einzuschlagen sind, mit den Vertiefungen 104 in Überdeckung zu bringen.

Der Rand 103 der langlochförmigen Erhebung 102 ist umlaufend, also nicht unterbrochen, und diese Erhebungen sind im vorderen Bereich des Beschlags so angeordnet, dass sie beim Beschlagen des Hufs auf der weißen Linie H zu liegen kommen, die in Fig. 6 nur in Form einer Strichreihe dargestellt ist, welche durch den Boden jeder Vertiefung 104 hindurch sichtbar ist, weil hier als Kunsstoff für den Beschlag ein transparentes Material benutzt wird.

Wie ebenfalls aus Fig. 6 ersichtlich, sind die Erhebungen 102 im vorderen Bereich des Beschlags 100 beidseitig seiner Symmetrieachse F-F in gleichmäßigen Abständen angeordnet, und zwischen ihnen und neben ihnen ist die Lauffläche 106 des Hufbeschlags mit die Profilierung ergänzenden noppenförmigen Nasen 107, 108 ausgestattet, die unterschiedlich aber auch gleich gestaltet sein können und voneinander beabstandet sind. Bei der in Fig. 7 gezeigten Schnittansicht sind zwei dieser Nasen 108 dargestellt, woraus erkennbar ist, dass die Nasen einen konischen Querschnitt aufweisen und sich zur Laufflachenoberflache hin verjüngen, so daß Verunreinigungen in der Uuffläche des Hufbeschlags leichter entfembar sind.

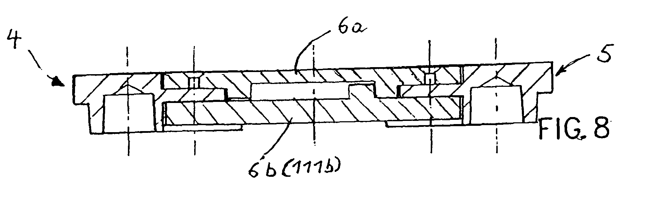

Wie aus Fig. 8 ersichtlich, besteht der Verbindungssteg aus wenigstens einem Pass-Stück 6a, entsprechend 111 bei der Ausführung von Fig. 7 und einem Brückenadapter 6b, 111b, die in den dargestellten Einbauzustand im wesentlichen deckungsgleich übereinanderliegen, miteinander verbunden und mit den Schenkelenden 4, 5 verschraubt sind.

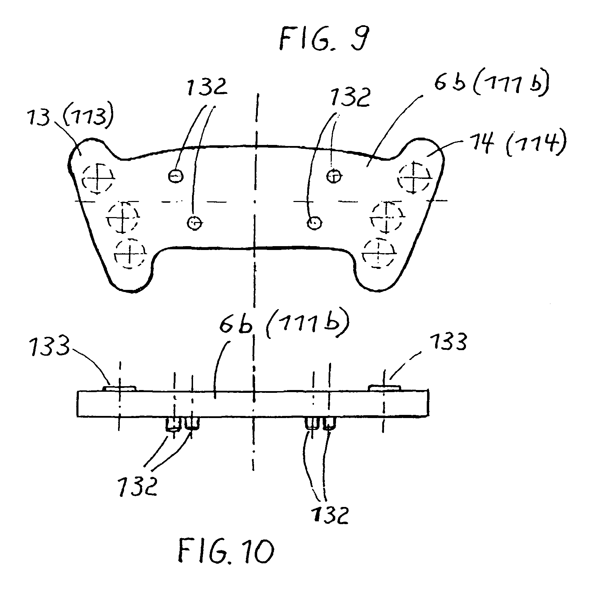

Zur Verbindung von Pass-Stück und Brückenadapter können, wie aus den Figuren 9 und 10 hervorgeht, Verbindungsnoppen 132 oder andere, nicht dargestellte stegartige Verbindungselemente dienen, die aus der Oberfläche des Brückenadapters herausragen und in ihnen gegenüberliegende Vertiefungen des Pass-Stücks eingreifen. Ebenso besteht die Möglichkeit, dass diese Verbindungselemente aus der Oberfläche des Pass-Stücks herausragen und in ihnen gegenüberliegende Vertiefungen des Brückenadapters eingreifen.

Die Verbindungsnoppen 132 oder ihnen vergleichbaren Elemente sind symmetrisch zur Längsachse 12; F-F des Verbindungsstegs und Hufbeschlags 1, 100 angeordnet, jedoch zweckmässigerweise ausreichend weit beabstandet, um Pass-Stück und Brückenadapter funktionell wie einen Balken mit erhöhter Biegefestigkeit und Steifigkeit wirken zu lassen.

Sowohl das Pass-Stück 6a, 111 als auch der Brückenadapter 6b, 111b weisen zwei in die Oberfläche der Schenkelenden 4, 5 (Fig. 1) integrierte, flache, seitliche Flügel 13, 14; 113, 114 und ein diese verbindendes Mittelstück auf Nicht nur die seitlichen Flügel des Pass-Stücks, sondern auch diejenigen des Brückenadapters entsprechen in ihrer Formgebung den Aussparungen 7, 8 in den Schenkelenden 4, 5 und verlaufen bei dem dargestellten Ausführungsbeispiel schräg zur Längsachse 11; F-F des Hufbeschlags.

Sowohl das Pass-Stück als auch der Brückenadapter sind mit nicht dargestellten Rastelementen versehen, die beim Einbau in entsprechend ausgebildete Gegenelemente an den Schenkelenden einrasten.

Zwecks Verbindung des Brückenadapters mit dem Pass-Stück mit Hilfe von Schrauben ist die Oberfläche des Brückenadapters, die die Schraubenköpfe aufnimmt, mit Verdickungen 133 versehen, wie in Fig. 10 dargestellt, die zur Stabilisierung der Schraubverbindung dienen.

Der Brückenadapter 111b hat im Verbindungszustand mit dem Pass-Stück 6a, 111 die Aufgabe, das Aufbiegen des Hufbeschlags zur Hufinnenseite hin insbesondere bei der Montage von grossen Verbindungselementen, zu verhindern, also die Biegefestigkeit bzw. Biegesteifigkeit des Pass-Stücks zu erhöhen. Dabei entspricht die Gesamtdicke des Verbindungselementes, bestehend aus Pass-Stück und Brückenadapter, im wesentlichen der Dicke der Schenkelenden 4, 5 des Hufbeschlags.

## Patentansprüche

1. Hufeisenartiger, plattenförmiger Hufbeschlag aus Kunststoff dessen beide Schenkel zur Anpassung an die Grösse des Hufes mit einer Einrichtung zur Veränderung des gegenseitigen Abstandes der Schenkel in Form eines flächendeckenden, separaten Verbindungssteges, auch Brücke genannt, versehen sind, der mit den Schenkeln des eine mit Profilköipem versehene Lauffläche aufweisenden Beschlags im Bereich der Schenkelenden in Eingriff bringbar ist und dessen Gestalt die Umrissform der Enden der Schenkel zu deren gegenseitiger Verbindung im wesentlichen vollständig ergänzt, wobei der Verbindungssteg im Einbauzustand in in den Schenkelenden vorhandene Aussparungen in Form flächiger seitlicher Auswölbungen eingreift, um die Schenkelenden unter Spannung miteinander in lösbarer Verbindung zu halten, **dadurch gekennzeichnet, dass** der Verbindungssteg aus wenigstens einem Pass-Stück (6a, 111a) und einem Brückenadapter (6b, 111b) besteht, die im Einbauzustand im wesentlichen deckungsgleich übereinander liegen und miteinander verbunden sind und von denen das Pass-Stück (6a, 111a) in der dem Huf zugewandten Oberseite (11a) des Hufbeschlags (1, 100) und der Brückenadapter (6b, 111b) in der Unterseite und damit der Lauffläche (112) des Hufbeschlags im Bereich der Enden (4, 5) der Schenkel (2, 3; 109, 110) im wesentlichen vollständig integriert sind.

2. Hufbeschlag nach Anspruch 1, **dadurch gekennzeichnet, dass** das Pass-Stück (6a, 111a) und der Brückenadapter (6b, 111b) mit den Schenkelenden (4, 5) verschraubt sind.

3. Hufbeschlag nach Anspruch 1 oder 2, **dadurch gekennzeichnet, dass** das Pass-Stück (6a, 111a) und der Brückenadapter (6b, 111b) mittels noppen- oder stegartiger Verbindungselemente, die aus der Oberfläche des Brückenadapters und/oder des Pass-Stücks herausragen und in ihnen gegenüberliegende Vertiefungen des Pass-Stücks oder Brückenadapters eingreifen, miteinander verbunden sind.

4. Hufbeschlag nach Anspruch 3, **dadurch gekennzeichnet, dass** die Verbindungsnoppen (132) symmetrisch zur Längsachse (12, F-F) des Verbindungssteges und Hufbeschlags (1, 100) angeordnet sind.

5. Hufbeschlag nach einem der Ansprüche 1 bis 4, **dadurch gekennzeichnet, dass** der Verbindungssteg die Enden (4, 5) der beiden Schenkel (2, 3; 109, 110) formschlüssig und kraftschlüssig verbindet.

6. Hufbeschlag nach einem der Ansprüche 1 bis 5, **dadurch gekennzeichnet, dass** der Verbindungssteg symmetrisch zur Längsachse (12, F-F) des Hufbeschlags (1, 100) und damit zu den Schenkeln (2, 3; 109, 110) ausgebildet ist.

7. Hufbeschlag nach einem der Ansprüche 1 bis 6, **dadurch gekennzeichnet, dass** sowohl das Paßstück (6a, 111a) als auch der Brückenadapter (6b, 111b) aus zwei in die Oberfläche der Schenkelenden (4, 5) integrierbaren, flachen, seitlichen Flügeln (13, 14; 113, 114) und einem diese verbindenden, erhabenen Mittelstück (15, 115) bestehen.

8. Hufbeschlag nach Anspruch 7, **dadurch gekennzeichnet, dass** die seitlichen Flügel (13, 14; 113, 114) und die der Flügelform entsprechenden Aussparungen (7, 8) in den Schenkelenden (45) zur Längsachse (12, F-F) des Hufbeschlags (1, 100) schräg verlaufende Umrissteillinien (16, 17, 18) aufweisen und eine kleeblattähnliche Gestalt haben.

9. Hufbeschlag nach einem der Ansprüche 1 bis 8, **dadurch gekennzeichnet, dass** sowohl das Pass-Stück (6a, 111a) als auch der Brückenadapter (6b, 111b) mit Rastelementen versehen ist, die beim Einbau in entsprechend ausgebildete Gegenelemente an den Schenkelenden (4, 5) einrastbar sind.

10. Hufbeschlag nach Anspruch 9, **dadurch gekennzeichnet, dass** die Schenkelenden (4, 5) in Richtung auf das kopfseitige Ende (32) des Hufbeschlags (1) konkav bzw. konvex gekrümmt sind.

11. Hufbeschlag nach einem der Ansprüche 7 bis 10, **dadurch gekennzeichnet, dass** die erhabenen Mittelstücke (15, 115) von Pass-Stück (6a, 111a) und Brückenadapter (6b, 111b) eine Oberseite bzw. Unterseite aufweisen, die mit der Oberfläche der seitlichen Auswölbungen (9, 10) in einer Ebene liegt und mit der Oberfläche (11) der Schenkelenden (4, 5) bündig ist.

## Claims

1. Horseshoe- and plate-shaped horseshoe made of plastic, the two legs of which are provided with a device to change the mutual distance between the legs in the form of a comprehensive, separate connection panel also known as a bridge permitting adjustment to the size of the hoof, which can engage the legs of the horseshoe (with an outside surface provided with projections) in the area of the ends of the legs and the form of which supplements essentially completely the outline of the ends of the legs it is designed to connect, where the connection panel engages openings in the ends of the legs in the form of lateral recesses when it has been fitted, in order to maintain tension between the ends of the legs in a detachable connection, wherein the connection panel consists of at least one adapter (6a, 111a) and a bridge adapter (6b, 111b), which are superimposed on each other essentially congruently and are connected to each other when they have been fitted and the adapter (6a, 111a) of which is essentially completely integrated in the upper side (11a) of the horseshoe (1, 100) facing the hoof and the bridge adapter (6b, 111b) is essentially completely integrated in the lower side and thus in the outside surface (112) of the horseshoe in the area of the ends (4, 5) of the legs (2, 3; 109, 110).

2. Horseshoe according to claim 1, **wherein** the adapter (6a, 111a) and the bridge adapter (6b, 111b) are screwed to the ends of the legs (4, 5).

3. Horseshoe according to claim 1 or 2, **wherein** the adapter (6a, 111a) and the bridge adapter (6b, 111b) are connected to each other by means of knob- or ridge-shaped connection elements, which project out of the surface of the bridge adapter and/or the adapter and engage recesses opposite them in the adapter or bridge adapter.

4. Horseshoe according to claim 3, wherein the connection knobs (132) are located symmetrically with respect to the longitudinal axis (12, F-F) of the connection panel and the horseshoe (1, 100).

5. Horseshoe according to one of claims 1 to 4, wherein the connection panel connects the ends (4, 5) of the two legs (2, 3; 109, 110) by positive and non-positive locking.

6. Horseshoe according to one of claims 1 to 5, wherein the connection panel is designed symmetrically with respect to the longitudinal axis (12, F-F) of the horseshoe (1, 100) and thus to the legs (2, 3; 109, 110).

7. Horseshoe according to one of claims 1 to 6, wherein both the adapter (6a, 111a) and the bridge adapter (6b, 111b) consist of two flat, lateral wings (13, 14; 113, 114) that can be integrated in the surface of the ends of the legs (4, 5) and a raised central section (15, 115) connecting them.

8. Horseshoe according toclaim 7, wherein the lateral wings (13, 14; 113, 114) and the openings (7, 8) corresponding to the shape of the wings in the ends of the legs (4, 5) have lines forming part of the outline (16, 17, 18) located at an angle to the longitudinal axis (12, F-F) of the horseshoe (1, 100) and have a similar shape to a clover leaf.

9. Horseshoe according to one of claims 1 to 8, wherein both the adapter (6a, 111a) and the bridge adapter (6b, 111b) are provided with locking elements that can lock into place in appropriately shaped counter-elements at the ends of the legs (4, 5) when they are fitted.

10. Horseshoe according to claim 9, wherein the ends of the legs (4, 5) have a concave / convex shape in the direction of the top end (32) of the horseshoe (1).

11. Horseshoe according to one of claims 7 to 10, wherein the raised central sections (15, 115) of the adapter (6a, 111a) and the bridge adapter (6b, 111b) have an upper side / a lower side that is at the same level as the surface of the lateral recesses (9, 10) and is flush with the surface (11) of the ends of the legs (4, 5).

## Revendications

1. Ferrure de sabot en forme de plaquette de matière'synthétique semblable à un fer à cheval, dont les deux branches sont dotées, pour s'adapter à la taille du sabot, d'un dispositif pour modifier l'écartement réciproque des branches qui se présente sous la forme d'une barrette de liaison séparée, également appelée pont, recouvrant une surface, laquelle barrette de liaison peut être mise en prise, dans la zone des extrémités des branches de la ferrure, avec lesdites branches de la ferrure qui présente une surface d'appui dotée de corps profilés, et complète essentiellement entièrement avec sa forme le contour des extrémités des branches afin de les relier l'une à l'autre, la barrette de liaison une fois montée se mettant en prise dans des évidements prévus dans les extrémités des branches, qui se présentent sous la forme de concavités latérales étendues, afin de maintenir les extrémités des branches assemblées sous tension de manière amovible, **caractérisée en ce que** la barrette de liaison est composée d'au moins une pièce ajustée (6a, 111a) et d'un adaptateur de pont (6b, 111b) qui, une fois montés, se recouvrent pour l'essentiel parfaitement et sont assemblés entre eux, sachant que, dans la zone des extrémités (4, 5) des branches (2, 3 ; 109, 110), la pièce ajustée (6a, 111a) est pour l'essentiel complètement intégrée dans le dessus (11a) de la ferrure de sabot (1, 100) qui est tourné vers le sabot et l'adaptateur de pont (6b, 11b) dans le dessous et donc dans la surface d'appui (112) de la ferrure de sabot.

2. Ferrure de sabot selon la revendication 1, **caractérisée en ce que** la pièce ajustée (6a, 111a) et l'adaptateur de pont (6b, 111b) sont vissés aux extrémités des branches (4,5).

3. Ferrure de sabot selon la revendication 1 ou 2, **caractérisée en ce que** la pièce ajustée (6a, 111a) et l'adaptateur de pont (6b, 111b) sont assemblés entre eux au moyen d'éléments d'assemblage en forme de picot ou de nervure qui font saillie de la surface de l'adaptateur de pont etlou de la pièce ajustée et qui se mettent en prise dans des renfoncements de la pièce ajustée ou de l'adaptateur de pont qui leur font face.

4. Ferrure de sabot selon la revendication 3, **caractérisée en ce que** les picots d'assemblage (132) sont disposés symétriquement par rapport à l'axe longitudinal (12, F-F) de la barrette de liaison et de la ferrure de sabot (1, 100).

5. Ferrure de sabot selon l'une des revendications 1 à 4, **caractérisée en ce que** la barrette de liaison relie les extrémités (4, 5) des deux branches (2, 3 ; 109, 110) par engagement positif ou par adhérence.

6. Ferrure de sabot selon l'une des revendications 1 à 5, **caractérisée en ce que** la barrette de liaison est réalisée de façon symétrique par rapport à l'axe longitudinal (12; F-F) de la ferrure de sabot (1, 100) et donc par rapport aux branches (2, 3 ; 109, 110).

7. Ferrure de sabot selon l'une des revendications 1 à 6, **caractérisée en ce que** tant la pièce ajustée (6a, 111a) que l'adaptateur de pont (6b, 111b) est composé(e) de deux ailes latérales (13, 14 ; 113, 114) plates pouvant être encastrées dans la surface des extrémités (4, 5) des branches et d'une partie centrale (15, 115) en saillie reliant ces dernières.

8. Ferrure de sabot selon la revendication 7, **caractérisée en ce que** les ailes latérales (13, 14 ; 113, 114) et les évidements (7, 8) correspondant à la forme des ailes qui sont ménagés dans les extrémités (4, 5) des branches présentent des parties de contour (16, 17, 18) s'étendant en biais par rapport à l'axe longitudinal (12, FF) de la ferrure de sabot (1, 100) et une forme semblable à celle d'une feuille de trèfle.

9. Ferrure de sabot selon l'une des revendications 1 à 8, **caractérisée en ce que** tant la pièce ajustée (6a, 111a) que l'adaptateur de pont (6b, 111b) est muni(e) d'éléments d'enclenchement qui, lors du montage, peuvent venir s'enclencher dans des pendants réalisés de façon complémentaire aux extrémités (4, 5) des branches.

10. Ferrure de sabot selon la revendication 9, **caractérisée en ce que** les extrémités (4, 5) des branches sont courbées respectivement de façon concave et convexe en direction de la partie avant (32) de la ferrure de sabot.

11. Ferrure de sabot selon l'une des revendications 7 à 10, **caractérisée en ce que** les parties centrales en saillie (15,115) de la pièce ajustée (6a, 111a) et de l'adaptateur en forme de pont (6b, 111b) présentent chacune un dessus et un dessous qui sont situés dans le même plan que les concavités latérales (9, 10) et qui sont en affleurement avec la surface (11) des extrémités (4, 5) des branches.
